# FASCICULE DE BREVET EUROPEEN

(11) **EP 2 975 986 B1**
(45) Date de publication et mention de la délivrance du brevet: **10.05.2017**
(21) Numéro de dépôt: 14716898.3
(22) Date de dépôt: 19.03.2014
(51) Int. Cl.: A47J 43/06, A47J 43/08

(54) **APPAREIL DE PREPARATION CULINAIRE**
VORRICHTUNG ZUR SPEISENZUBEREITUNG
FOOD PREPARATION APPLIANCE

(30) Priorité: 22.03.2013 FR 1352601
(43) Date de publication de la demande: 27.01.2016
(73) Titulaire: SEB S.A., 69130 Ecully (FR)
(72) Inventeur: LABORDE, Daniel, F-64170 Artix (FR); ASTEGNO, Didier, F-64000 Pau (FR); DOMINGUEZ, Augustin, F-65000 Tarbes (FR)
(74) Mandataire: Cémeli, Eric Philippe Laurent
(86) Numéro de dépôt international: PCT/FR2014/050646
(87) Numéro de publication internationale: WO 2014/147347

(56) Documents cités:
- WO-A1-2012/097671
- US-A1- 2002 176 320

## Description

La présente invention concerne de manière générale un appareil de préparation culinaire comprenant au moins deux accessoires de travail différents.

Il est connu dans l'art antérieur des appareils de préparation culinaire qui comprennent plusieurs accessoires de travail pour offrir plusieurs fonctions de préparation à l'utilisateur. Ces fonctions ne doivent pas présenter de différences telles que les normes de sécurité à appliquer ne soient pas les mêmes, car un tel appareil doit respecter les normes de sécurité, quels que soient les accessoires utilisés. En particulier, si une fonction de coupe à grande vitesse est prévue, l'appareil ne doit pas proposer de fonctionnement en marche continue du moteur électrique, ce qui le rend incompatible avec un accessoire qui impose un fonctionnement en marche continue. Ces impératifs contradictoires sont un frein pour proposer un appareil de préparation culinaire qui offre ces deux fonctions.

Un appareil selon le préambule de la revendication 1 est connu du document US 2002/176320.

Un but de la présente invention est de répondre aux inconvénients mentionnés ci-dessus et en particulier, tout d'abord, de proposer un appareil qui peut réaliser d'une part une préparation culinaire avec fonction de marche continue du moteur, et qui peut réaliser d'autre part une préparation culinaire qui est incompatible avec cette fonction de marche continue, tout en garantissant la sécurité de l'utilisateur.

Pour cela un premier aspect de l'invention concerne un appareil de préparation culinaire comprenant :
- un boîtier support,
- au moins un premier accessoire de travail amovible et un deuxième accessoire de travail amovible comprenant chacun un outil de travail,
- un moteur électrique agencé dans le boîtier support, avec un axe d'entraînement agencé pour entraîner l'un ou l'autre des outils de travail,
- un circuit électrique agencé pour commander une mise en marche du moteur électrique,
dans lequel le circuit électrique est agencé pour présenter une fonction de marche continue du moteur électrique, du fait que le premier accessoire de travail est agencé pour désactiver la fonction de marche continue, lorsque son outil de travail est entraîné par le moteur électrique.

L'appareil selon la présente mise en oeuvre peut proposer en toute sécurité un premier accessoire de travail dont l'utilisation interdit le fonctionnement en marche continue du moteur électrique, car le premier accessoire de travail lui-même désactive cette fonction de marche continue. En d'autres termes, lorsque son outil de travail est entraîné par le moteur électrique, le premier accessoire de travail, qui est alors forcément monté sur le boîtier support, désactive automatiquement cette fonction de marche continue, sans action de la part de l'utilisateur.

Selon un aspect de l'invention, la tige de commande est agencée le long du récipient de travail.

Selon un aspect de l'invention, le circuit électrique comprend un premier interrupteur manuel agencé pour pouvoir sélectionner la fonction de marche continue du moteur électrique, le circuit électrique comprend un deuxième interrupteur normalement fermé, monté en série du premier interrupteur sélectionnant la fonction de marche continue, et le premier accessoire de travail est agencé pour commuter et maintenir le deuxième interrupteur dans un état ouvert, lorsque son outil de travail est entraîné par le moteur électrique. La désactivation automatique de la fonction de marche continue se fait par un câblage du circuit électrique, qui inclut le deuxième interrupteur de ce circuit électrique, automatiquement ouvert, si le premier accessoire de travail est monté sur le boîtier support.

Selon un aspect de l'invention, le premier accessoire de travail comprend un dispositif accélérateur de vitesse agencé pour être monté entre le moteur électrique et l'outil de travail du premier accessoire de travail, et le dispositif accélérateur de vitesse est agencé pour commuter et maintenir le deuxième interrupteur dans l'état ouvert. L'appareil et son moteur électrique sont simplifiés par cette mise en oeuvre, car le premier accessoire de travail comprend son propre accélérateur de vitesse, ce qui limite les modifications du boîtier support.

Selon un aspect de l'invention, le dispositif accélérateur de vitesse est amovible par rapport à une partie principale du premier accessoire de travail comportant l'outil de travail. Cette mise en oeuvre permet un lavage séparé (au lave vaisselle par exemple) de la partie principale du premier accessoire de travail.

Selon un aspect de l'invention, le premier interrupteur manuel est également agencé pour pouvoir sélectionner une fonction de marche intermittente du moteur électrique, et le circuit électrique comprend un troisième interrupteur normalement ouvert, monté en série du premier interrupteur sélectionnant la fonction de marche intermittente et agencé pour commander la mise en marche intermittente.

Selon un aspect de l'invention, le premier accessoire de travail comprend un récipient de travail agencé pour être monté sur le boîtier support,
et le récipient de travail monté sur le boîtier support est mobile par rapport à au boîtier support depuis une position d'arrêt vers une position de fonctionnement, pour commander le troisième interrupteur, lors d'un mouvement de commande provoqué par un utilisateur.

C'est le premier accessoire de travail lui-même qui commande le troisième interrupteur pour faire fonctionner le moteur électrique en marche intermittente, ce qui signifie que l'autre accessoire de travail ne peut pas faire fonctionner le moteur électrique en marche intermittente. L'utilisateur ne peut donc pas effectuer d'opérations non conformes aux normes, puisque les options de fonctionnement sont directement liées aux accessoires de travail.

Selon un aspect de l'invention, le mouvement de commande depuis la position d'arrêt vers la position de fonctionnement comprend :
- une première partie de course pendant laquelle l'outil de travail du premier accessoire de travail et l'axe d'entraînement s'engagent l'un avec l'autre,
- une deuxième partie de course pendant laquelle le troisième interrupteur est commandé.

La sécurité de fonctionnement est améliorée avec cette mise en oeuvre, car le mouvement de commande du récipient de travail est également défini pour engager l'outil de travail avec l'axe d'entraînement du moteur électrique. En d'autres termes, l'outil de travail n'est en prise avec le moteur électrique que lorsque ce dernier doit l'entraîner : lors du mouvement du récipient de travail vers la position d'arrêt, l'outil de travail se désengage de l'axe d'entraînement, en même temps que le moteur électrique s'arrête, mais ne subit pas l'inertie du moteur électrique. L'outil de travail s'arrête plus rapidement que le moteur électrique. Il est à noter que l'invention n'est pas limitée à un engagement direct de l'outil de travail avec l'axe d'entraînement, il peut être prévu d'avoir un organe d'accouplement intermédiaire entre l'outil de travail et l'axe d'entraînement du rotor du moteur électrique.

Selon un aspect de l'invention, l'appareil comprend au moins un élément élastique agencé pour être mis en contrainte lors du mouvement de commande et repousser le récipient de travail de la position de fonctionnement vers la position d'arrêt. La sécurité d'utilisation et l'ergonomie sont améliorées par cette mise en oeuvre : le retour du récipient de travail en position d'arrêt est automatique : le moteur électrique ne peut rester en fonctionnement que si l'utilisateur pousse le récipient de travail dans la position de fonctionnement.

Selon un aspect de l'invention, l'appareil comprend trois poussoirs à ressorts répartis sous le récipient de travail lorsque le récipient de travail est monté sur le boîtier support, agencés pour être mis en contrainte lors du mouvement de commande et repousser le récipient de travail de la position de fonctionnement vers la position d'arrêt. Les trois poussoirs à ressort selon cette mise en oeuvre offrent un positionnement stable au récipient de travail.

Selon un aspect de l'invention, le premier accessoire de travail comprend :
- un couvercle agencé pour être monté de manière amovible sur le récipient de travail,
- une tige de commande,
la tige de commande est agencée pour s'engager avec le couvercle lors du mouvement de montage du couvercle sur le récipient de travail,
et la tige de commande, engagée avec le couvercle monté sur le récipient de travail, est agencée pour être déplacée par le couvercle pour commander le troisième interrupteur, lors du mouvement de commande du récipient de travail.

La chaine de commande du récipient de travail sur le troisième interrupteur passe par le couvercle monté sur le récipient de travail, ce qui garantit que le récipient de travail sera obligatoirement fermé par le couvercle lors du fonctionnement de l'appareil.

Selon un aspect de l'invention, le premier accessoire de travail comprend un verrou accouplé à la tige de commande, et agencé pour occuper:
- une position de verrouillage dans laquelle le récipient de travail est verrouillé en position d'arrêt, si la tige de commande n'est pas engagée avec le couvercle, ou
- une position déverrouillée dans laquelle le récipient de travail peut passer de la position d'arrêt à la position de fonctionnement, si la tige de commande est engagée avec le couvercle.

L'ergonomie est améliorée, car si le couvercle est absent ou mal monté, l'utilisateur ne peut pas pousser le récipient de travail vers la position de fonctionnement, car le récipient de travail est verrouillé en position d'arrêt par le verrou, ce qui lui indique que le montage de l'appareil est incorrect ou incomplet pour fonctionner. En effet, le verrou ne passe dans la position déverrouillée que si le couvercle est engagé avec la tige de commande.

Selon un aspect de l'invention, l'engagement de la tige de commande avec le couvercle provoque un mouvement vertical de la tige de commande depuis une position libre vers une position engagée,
la tige de commande en position libre impose au verrou la position de verrouillage, pour former un obstacle au déplacement du récipient de travail vers la position de fonctionnement,
et la tige de commande en position engagée permet un mouvement horizontal de recul du verrou vers la position déverrouillée, afin de ne plus être un obstacle au déplacement du récipient de travail vers la position de fonctionnement.

En d'autres termes, la tige de commande en position libre forme une butée au verrou pour maintenir le verrou en position de verrouillage, et cette butée s'efface lorsque la tige de commande passe en position engagée : la tige de commande forme une came de commande pour le verrou.

Selon un aspect de l'invention, la tige de commande présente une ouverture pour permettre le recul du verrou, lorsque la tige de commande est en position engagée.

Selon un aspect de l'invention, le verrou est agencé pour :
- bloquer la tige de commande en position engagée lorsque le verrou est en position déverrouillée et lorsque le récipient de travail est en position de fonctionnement,
- laisser libre la tige de commande lorsque le verrou est en position de verrouillage, le récipient de travail étant en position d'arrêt.

Cette mise en oeuvre garantit que le couvercle ne peut pas être retiré lors du fonctionnement du moteur électrique, car le verrou n'autorise un mouvement de la tige de commande que si le verrou est en position de verrouillage, c'est-à-dire uniquement lorsque le récipient de travail est en position d'arrêt.

Selon un aspect de l'invention, le verrou en position déverrouillée est agencé pour entrer en butée avec le récipient de travail en position de fonctionnement. En liaison avec la mise en oeuvre dans laquelle la tige de commande forme une came de commande pour le verrou, cette mise en oeuvre prévoit que le récipient de travail forme également une came de commande. La tige de commande forme une came qui pousse le verrou en position de verrouillage lorsque le récipient de travail est en position d'arrêt, et le récipient de travail forme la contre came qui pousse le verrou en position déverrouillée, lorsque le récipient de travail est en position de fonctionnement.

Selon un aspect de l'invention, le couvercle est agencé pour être monté sur le récipient de travail selon une interface à baïonnette.

Selon un aspect de l'invention, l'engagement du couvercle avec la tige de commande est l'engagement d'un index dans une rainure.

Selon un aspect de l'invention, l'outil de travail du premier accessoire de travail est coupant et l'appareil forme un mini hachoir lorsque le premier accessoire de travail est monté sur le boîtier support.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un schéma de câblage d'un appareil selon la présente invention ;
- la figure 2 représente une vue éclatée d'un appareil selon la présente invention, avec un premier accessoire de travail ;
- la figure 3 représente l'appareil de la figure 2, avec un deuxième accessoire de travail.

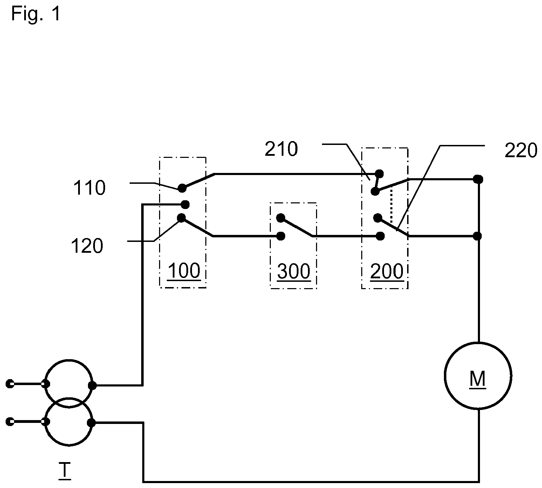

La figure 1 représente un schéma de câblage d'un appareil selon l'invention. Un transformateur de courant T alimente en courant électrique un circuit électrique de l'appareil. Le circuit électrique comprend un moteur électrique M, ainsi que trois interrupteurs 100, 200 et 300 électriques. Le premier interrupteur 100 est un interrupteur manuel à trois positions. Il permet à l'utilisateur d'ouvrir le circuit électrique (comme représenté), de choisir une fonction de marche continue (en connectant un pôle 110), ou de choisir une fonction de marche intermittente (en connectant un pôle 120).

Si la fonction de marche continue est choisie, le pôle 110 est relié au transformateur T, et c'est le deuxième interrupteur 200 qui permet ou non cette fonction. En effet, le deuxième interrupteur 200 présente un pôle 210 normalement fermé, de sorte que la fonction de marche continue est normalement possible. Cependant, si un premier accessoire de travail offre une fonction de préparation qui n'est pas compatible avec la fonction de marche continue (telle qu'une fonction de hachage à haute vitesse avec un outil coupant), le montage de ce premier accessoire de travail sur l'appareil ouvre le pôle 210, et le maintien ouvert, tant que le premier accessoire de travail est monté sur l'appareil. Ainsi, la sécurité de l'utilisateur est garantie automatiquement, sans aucune intervention de l'utilisateur. Tel que représenté figure 1, le schéma de câblage, avec son pôle 210 connecté, indique que le premier accessoire de travail n'est pas monté sur l'appareil.

On peut noter que le deuxième interrupteur 200 présente un pôle 220 normalement ouvert et lié au pôle 210, de sorte que lorsque le pôle 210 est déconnecté par le premier accessoire de travail installé sur l'appareil, le pôle 220 est automatiquement connecté. Si l'utilisateur positionne le premier interrupteur 100 sur la fonction de marche intermittente en connectant le pôle 120, alors le moteur électrique ne fonctionnera que si le troisième interrupteur 300 est fermé. Ce troisième interrupteur 300 est normalement ouvert, et on peut envisager de le commander par un mouvement du premier accessoire de travail, pour offrir un fonctionnement intuitif, comme expliqué ci dessous.

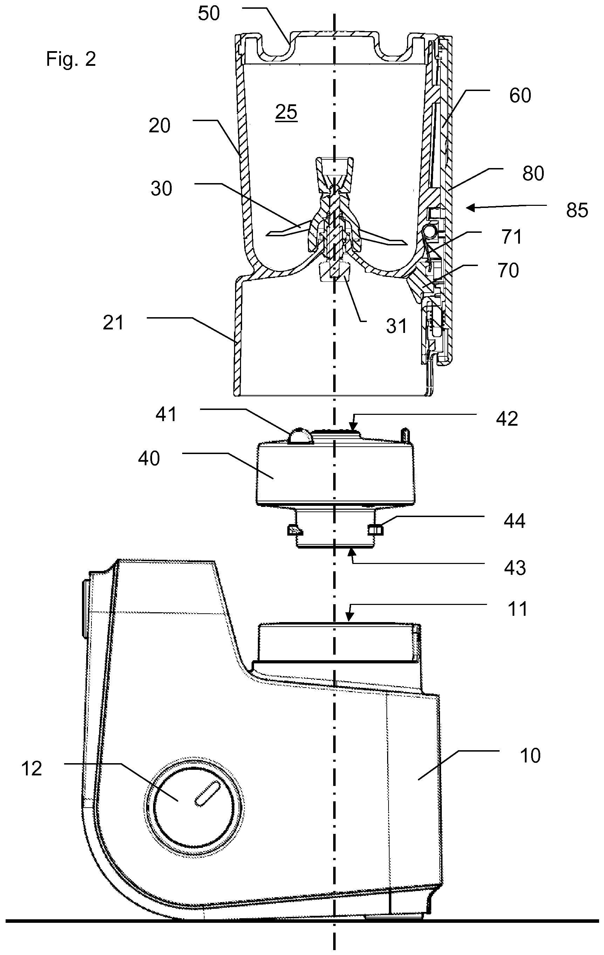

La figure 2 représente un appareil de préparation culinaire, avec un premier accessoire de travail 85, formant un mini hachoir. Cet appareil se différencie d'un hachoir à vis en ce qu'il comprend un outil coupant agencé pour tourner en rotation à grande vitesse dans un récipient fermé pour fragmenter des aliments à préparer.

L'appareil comprend un boîtier support 10, et peut servir comme mini hachoir. Dans ce cas, un dispositif accélérateur de vitesse 40 est monté sur le boîtier support 10, et un récipient de travail 20, comprenant un outil de travail 30 est ensuite installé sur le dispositif accélérateur de vitesse 40. L'outil de travail 30 peut être amovible par rapport au récipient de travail 20, ou y être installé à demeure. Un accouplement d'outil 31 relié à l'outil de travail 30 est agencé sous le fond du récipient de travail 20, dans un espace protégé par une jupe 21 de ce récipient de travail 20.

Le dispositif accélérateur de vitesse 40 est monté sur le boîtier support 10 par un montage de type baïonnette, et comporte des ergots 44 à cet effet. Le boîtier support 10 comprend le moteur électrique M avec un axe d'entrainement 11 dont l'emplacement est indiqué par la flèche représentée. Lorsque le dispositif accélérateur de vitesse 40 est monté sur le boîtier support 10, un accouplement d'entrée 43 du dispositif accélérateur de vitesse 40 s'engage avec l'axe d'entraînement 11 du boîtier support 10. Le dispositif accélérateur de vitesse 40 est donc entraîné par l'axe d'entrainement 11 de l'appareil et multiplie la vitesse d'entrée de l'accouplement d'entrée 43, de sorte que le dispositif accélérateur de vitesse 40 présente un accouplement de sortie 42 dont la vitesse de rotation est suffisante pour offrir la fonction de mini hachoir. De plus, le dispositif accélérateur de vitesse 40 force le deuxième interrupteur 200 (non représenté) à ouvrir le circuit offrant la fonction de marche continue, et à fermer le circuit offrant la fonction de marche intermittente.

Le récipient de travail 20 contient donc un outil de travail 30, et pour définir un espace de travail 25 clos lors du fonctionnement de l'appareil, un couvercle 50 est monté sur l'ouverture supérieure du récipient de travail 20. Afin de simplifier la liaison entre le couvercle 50 et le récipient de travail 20, le couvercle 50 est immobile par rapport au récipient de travail 20 lors de l'utilisation de l'appareil.

Cependant, pour garantir une bonne ergonomie d'utilisation, la commande du moteur électrique se fait en appuyant sur le couvercle 50, pour obtenir un fonctionnement intermittent de l'appareil. Lors de l'utilisation, le récipient de travail 20 est mobile en translation verticale par rapport au boîtier support 10, de sorte que le récipient de travail 20 effectue un mouvement de commande depuis une position d'arrêt vers une position de commande, dans laquelle le troisième interrupteur 300 électrique (non représenté sur cette figure) est fermé, de sorte à provoquer le fonctionnement de l'appareil.

A cet effet, lorsque le dispositif accélérateur de vitesse 40 est monté sur le boîtier support 10, l'utilisateur dispose l'outil de travail 30 dans le récipient de travail 20, ainsi que les aliments à préparer, et ferme le récipient de travail 20 avec le couvercle 50. Le sous ensemble obtenu est ensuite posé sur le dispositif accélérateur de vitesse 40. Ce dernier comprend des poussoirs à ressorts 41 qui soutiennent le sous ensemble récipient de travail 20 - couvercle 50 dans une position d'arrêt. Dans cette position d'arrêt, l'accouplement d'outil 31 n'est pas engagé avec l'accouplement de sortie 42 du dispositif accélérateur de vitesse 40, et le moteur électrique de l'appareil ne fonctionne pas.

Pour mettre en route le moteur électrique de l'appareil, l'utilisateur positionne un bouton de commande manuel 12 du premier interrupteur 100 sur une position mini hachoir, et pousse vers le bas le sous ensemble récipient de travail 20 - couvercle 50. Ce mouvement de translation verticale vers le bas provoque en premier lieu un engagement entre l'accouplement d'outil 31 de l'outil de travail 30 et l'accouplement de sortie 42 du dispositif accélérateur de vitesse 40, puis en second lieu une commande du troisième interrupteur 300 de l'appareil afin de mettre en fonctionnement le moteur électrique. Lorsque l'utilisateur relâche son effort, les poussoirs à ressorts 41 repoussent automatiquement le récipient de travail 20 vers le haut dans sa position d'arrêt, de sorte que le troisième interrupteur 300 est ouvert et coupe le fonctionnement du moteur électrique. De plus, l'accouplement d'outil 31 se désengage de l'accouplement de sortie 42, ce qui permet un arrêt rapide de l'outil de travail 30, même si le moteur électrique continue de tourner, en raison de son inertie et de celle du dispositif accélérateur de vitesse 40.

Afin de garantir la sécurité de l'utilisateur pendant le fonctionnement, il convient d'empêcher tout accès à l'outil de travail 30 lorsqu'il tourne.

A cet effet, un système de sécurité est intégré au récipient de travail 20. Tout d'abord, une tige de commande 60 est agencée le long du récipient de travail 20. Cette tige de commande 60 est agencée pour s'engager avec le couvercle 50 lorsque le couvercle 50 est monté sur le récipient de travail 20. Cet engagement provoque un mouvement vertical vers le bas de la tige de commande 60 (qui passe d'une position libre vers une position engagée), de sorte que lorsque le sous ensemble récipient de travail 20 - couvercle 50 est poussé dans la position de fonctionnement, c'est une extrémité inférieure de la tige de commande 60 qui agit sur le troisième interrupteur 300 de l'appareil. Si la tige de commande 60 n'est pas engagée avec le couvercle 50, la tige de commande 60 reste dans la position libre et son extrémité inférieure ne peut agir sur le troisième interrupteur 300 car elle reste trop haute. En d'autres termes, le troisième interrupteur 300 n'est actionné que si la tige de commande 60 est en position engagée, donc seulement si le couvercle 50 est monté et en place sur le récipient de travail 20.

De plus, un verrou 70 est accouplé à la tige de commande 60, afin d'améliorer la sécurité et l'ergonomie d'utilisation. En effet, ce verrou 70 peut occuper deux positions : une position de verrouillage dans laquelle le verrou 70 verrouille le récipient de travail 20 dans la position d'arrêt, et une position déverrouillée, dans laquelle le récipient de travail 20 peut aller dans la position de fonctionnement. La position du verrou 70 est commandée essentiellement par la tige de commande 60. Lorsque la tige de commande 60 est en position libre (c'est-à-dire lorsque le couvercle 50 n'est pas correctement monté et en place sur le récipient de travail 20), le verrou 70 est poussé par la tige de commande 60 vers l'axe de rotation, de sorte que le verrou 70 forme un obstacle au mouvement du récipient de travail 20, et le récipient de travail 20 ne peut pas descendre vers la position de fonctionnement. Il en résulte que si le couvercle 50 est absent ou mal monté, le récipient de travail 20 ne peut pas effectuer le mouvement de commande, ce qui indique immédiatement à l'utilisateur qu'un élément est mal monté. Par contre, si le couvercle 50 est correctement monté, la tige de commande 60 descend en position engagée, et libère, grâce à une ouverture, le verrou 70 et le verrou 70 peut reculer vers la position déverrouillée, pour ne plus former d'obstacle au récipient de travail 20. Ce dernier peut descendre en position de fonctionnement, de sorte que la tige de commande 60 actionne le troisième interrupteur 300 de l'appareil.

Enfin, lors du fonctionnement du moteur électrique, l'appareil empêche tout retrait du couvercle 50. En effet, le verrou 70, reculé en position déverrouillée, bloque la tige de commande 60 dans la position engagée, car le verrou 70 est en butée contre le récipient de travail 20. Autrement dit, lorsque le récipient de travail 20 est en position de fonctionnement, le récipient de travail 20 bloque le verrou 70 en position déverrouillée, qui bloque à son tour la tige de commande 60 en position engagée. La tige de commande 60 ne peut pas remonter en position libre, et le couvercle 50 ne peut pas se désengager de la tige de commande 60, le couvercle 50 reste bloqué dans sa position de montage sur le récipient de travail 20, tant que le récipient de travail 20 est en position de fonctionnement. Lors du retour du récipient de travail 20 dans la position d'arrêt, un ressort 71 aide le verrou 70 à retourner dans la position de verrouillage, afin de permettre aisément à la tige de commande 60 de retourner en position libre, si l'utilisateur veut démonter le couvercle 50.

Enfin, une plaque 80 recouvre la tige de commande 60 et le verrou 70, pour améliorer l'esthétique du récipient de travail 20 et cacher toutes ces pièces mobiles.

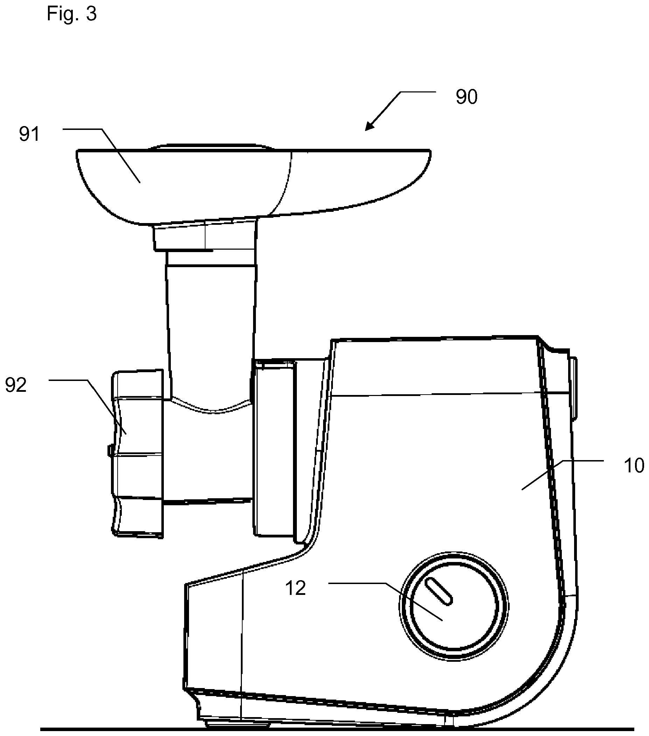

La figure 3 représente l'appareil selon la présente invention en utilisation avec un deuxième accessoire de travail 90 qui forme un hachoir à vis. Lors de cette utilisation en hachoir à vis, l'axe de rotation du moteur électrique est horizontal, et le boîtier support 10 est pivoté à cet effet d'un quart de tour par rapport à son positionnement représenté à la figure 2. Le deuxième accessoire de travail 90 comprend une goulotte d'alimentation 91 montée sur une vis de hachage poussant les aliments hachés au travers d'une filière 92. Pour utiliser l'appareil avec ce deuxième accessoire de travail 90, le deuxième interrupteur 200 n'est plus commuté par le dispositif accélérateur de vitesse 40 car le dispositif accélérateur de vitesse 40 n'est plus monté sur le boîtier support 10, de sorte que la fonction de marche continue est activable. A cet effet, l'utilisateur positionne le premier interrupteur 100 par le biais de son bouton de commande manuel 12 sur la fonction marche continue, et le moteur électrique est mis en marche. Inversement, la fonction marche intermittente ne peut pas être commandée par le deuxième accessoire de travail 90 dépourvu de tige de commande mobile.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Appareil de préparation culinaire comprenant :
- un boîtier support (10),
- au moins un premier accessoire de travail (85) et un deuxième accessoire de travail (90) amovibles comprenant chacun un outil de travail (30),
- un moteur électrique agencé dans le boîtier support (10), avec un axe d'entraînement (11) agencé pour entraîner l'un ou l'autre des outils de travail (30),
- un circuit électrique agencé pour commander une mise en marche du moteur électrique,
dans lequel le circuit électrique est agencé pour présenter une fonction de marche continue du moteur électrique, **caractérisé en ce que** le premier accessoire de travail (85) est agencé pour désactiver la fonction de marche continue, lorsque son outil de travail (30) est entraîné par le moteur électrique.

2. Appareil selon la revendication 1, **caractérisé en ce que** le circuit électrique comprend un premier interrupteur (100) manuel agencé pour pouvoir sélectionner la fonction de marche continue du moteur électrique, **en ce que** le circuit électrique comprend un deuxième interrupteur (200) normalement fermé, monté en série du premier interrupteur (100) sélectionnant la fonction de marche continue, et **en ce que** le premier accessoire de travail (85) est agencé pour commuter et maintenir le deuxième interrupteur (200) dans un état ouvert, lorsque son outil de travail (30) est entraîné par le moteur électrique.

3. Appareil selon la revendication 2, **caractérisé en ce que** le premier accessoire de travail (85) comprend un dispositif accélérateur de vitesse (40) agencé pour être monté entre le moteur électrique et l'outil de travail (30) du premier accessoire de travail (85), et **en ce que** le dispositif accélérateur de vitesse (40) est agencé pour commuter et maintenir le deuxième interrupteur (200) dans l'état ouvert.

4. Appareil selon l'une des revendications 2 ou 3, **caractérisé en ce que** le premier interrupteur (100) manuel est également agencé pour pouvoir sélectionner une fonction de marche intermittente du moteur électrique, et **en ce que** le circuit électrique comprend un troisième interrupteur (300) normalement ouvert, monté en série du premier interrupteur (100) sélectionnant la fonction de marche intermittente et agencé pour commander la mise en marche intermittente.

5. Appareil selon la revendication 4, **caractérisé**
- **en ce que** le premier accessoire de travail (85) comprend un récipient de travail (20) agencé pour être monté sur le boîtier support (10),
- et **en ce que** le récipient de travail (20) monté sur le boîtier support (10) est mobile par rapport au boîtier support (10) depuis une position d'arrêt vers une position de fonctionnement, pour commander le troisième interrupteur (300), lors d'un mouvement de commande provoqué par un utilisateur.

6. Appareil selon la revendication 5, **caractérisé en ce que** le mouvement de commande depuis la position d'arrêt vers la position de fonctionnement comprend :
- une première partie de course pendant laquelle l'outil de travail (30) du premier accessoire de travail (85) et l'axe d'entraînement (11) s'engagent l'un avec l'autre,
- une deuxième partie de course pendant laquelle le troisième interrupteur (300) est commandé.

7. Appareil selon l'une des revendications 5 ou 6, **caractérisé en ce qu'**il comprend au moins un élément élastique agencé pour être mis en contrainte lors du mouvement de commande et repousser le récipient de travail (20) de la position de fonctionnement vers la position d'arrêt.

8. Appareil selon la revendication 7, **caractérisé en ce qu'**il comprend trois poussoirs à ressorts (41) répartis sous le récipient de travail (20) lorsque le récipient de travail (20) est monté sur le boîtier support (10), agencés pour être mis en contrainte lors du mouvement de commande et repousser le récipient de travail (20) de la position de fonctionnement vers la position d'arrêt.

9. Appareil selon l'une des revendications 5 à 8, **caractérisé en ce que** le premier accessoire de travail (85) comprend :
- un couvercle (50) agencé pour être monté de manière amovible sur le récipient de travail (20),
- une tige de commande (60),
**en ce que** la tige de commande (60) est agencée pour s'engager avec le couvercle (50) lors du mouvement de montage du couvercle (50) sur le récipient de travail (20),
et **en ce que** la tige de commande (60), engagée avec le couvercle (50) monté sur le récipient de travail (20), est agencée pour être déplacée par le couvercle (50) pour commander le troisième interrupteur (300), lors du mouvement de commande du récipient de travail (20).

10. Appareil selon la revendication 9, **caractérisé en ce que** la tige de commande (60) est agencée le long du récipient de travail (20).

11. Appareil selon l'une des revendications 9 ou 10, **caractérisé en ce que** le premier accessoire de travail (85) comprend un verrou (70) accouplé à la tige de commande (60), et agencé pour occuper :
- une position de verrouillage dans laquelle le récipient de travail (20) est verrouillé en position d'arrêt, si la tige de commande (60) n'est pas engagée avec le couvercle (50), ou
- une position déverrouillée dans laquelle le récipient de travail (20) peut passer de la position d'arrêt à la position de fonctionnement, si la tige de commande (60) est engagée avec le couvercle (50).

12. Appareil selon la revendication 11, **caractérisé en ce que** l'engagement de la tige de commande (60) avec le couvercle (50) provoque un mouvement vertical de la tige de commande (60) depuis une position libre vers une position engagée,
**en ce que** la tige de commande (60) en position libre impose au verrou (70) la position de verrouillage, pour former un obstacle au déplacement du récipient de travail (20) vers la position de fonctionnement,
et **en ce que** la tige de commande (60) en position engagée permet un mouvement horizontal de recul du verrou (70) vers la position déverrouillée, afin de ne plus être un obstacle au déplacement du récipient de travail (20) vers la position de fonctionnement.

13. Appareil selon l'une des revendications 11 ou 12, **caractérisé en ce que** le verrou (70) est agencé pour :
- bloquer la tige de commande (60) en position engagée lorsque le verrou (70) est en position déverrouillée et lorsque le récipient de travail (20) est en position de fonctionnement,
- laisser libre la tige de commande (60) lorsque le verrou (70) est en position de verrouillage, le récipient de travail (20) étant en position d'arrêt.

14. Appareil selon l'une des revendications 9 à 13, **caractérisé en ce que** le couvercle (50) est agencé pour être monté sur le récipient de travail (20) selon une interface à baïonnette.

15. Appareil selon l'une des revendications 9 à 14, **caractérisé en ce que** l'engagement du couvercle (50) avec la tige de commande (60) est l'engagement d'un index dans une rainure.

16. Appareil selon l'une des revendications 1 à 15, **caractérisé en ce que** l'outil de travail (30) du premier accessoire de travail (85) est coupant et **en ce que** l'appareil forme un mini hachoir lorsque le premier accessoire de travail (85) est monté sur le boîtier support (10).

## Patentansprüche

1. Gerät zur Zubereitung von Speisen mit:
- einem Montagesockel (10),
- zumindest einem ersten Arbeitszubehör (85) und einem zweiten Arbeitszubehör (90), die abnehmbar sind und jeweils ein Arbeitswerkzeug (30) umfassen,
- einem Elektromotor, der in dem Montagesockel (10) angeordnet ist, mit einer Antriebsachse (11), die für den Antrieb des einen oder des anderen der Arbeitswerkzeuge (30) ausgelegt ist,
- einem Stromkreis, der für die Steuerung der Inbetriebsetzung des Elektromotors ausgelegt ist, wobei der Stromkreis für eine Dauerbetriebsfunktion des Elektromotors ausgelegt ist, **dadurch gekennzeichnet, dass** das erste Arbeitszubehör (85) dafür ausgelegt ist, die Dauerbetriebsfunktion zu deaktivieren, wenn sein Arbeitswerkzeug (30) von dem Elektromotor angetrieben wird.

2. Gerät nach Anspruch 1, **dadurch gekennzeichnet, dass** der Stromkreis einen ersten manuellen Schalter (100) umfasst, der dafür ausgelegt ist, die Dauerbetriebsfunktion des Elektromotors auswählen zu können, und dass der Stromkreis einen zweiten normalerweise geschlossenen Schalter (200) umfasst, der mit dem ersten Schalter (100), der die Dauerbetriebsfunktion auswählt, in Reihe geschaltet ist, und dass das erste Arbeitszubehör (85) dafür ausgelegt ist, den zweiten Schalter (200) umzuschalten und im geöffneten Zustand zu halten, wenn das Arbeitswerkzeug (30) von dem Elektromotor angetrieben wird.

3. Gerät nach Anspruch 2, **dadurch gekennzeichnet, dass** das erste Arbeitswerkzeug (85) eine Vorrichtung (40) zur Beschleunigung der Drehzahl umfasst, die dafür ausgelegt ist, zwischen den Elektromotor und das Arbeitswerkzeug (30) des ersten Arbeitszubehörs (85) geschaltet zu werden, und dass die Vorrichtung (40) zur Beschleunigung der Drehzahl dafür ausgelegt ist, den zweiten Schalter (200) umzuschalten und im geöffneten Zustand zu halten.

4. Gerät nach einem der Ansprüche 2 oder 3, **dadurch gekennzeichnet, dass** der erste manuelle Schalter (100) ebenfalls dafür ausgelegt ist, eine Intervallbetriebsfunktion des Elektromotors auswählen zu können, und dass der Stromkreis einen dritten normalerweise geöffneten Schalter (300) umfasst, der mit dem ersten Schalter (100), der die Intervallbetriebsfunktion auswählt, in Reihe geschaltet und dafür ausgelegt ist, die Inbetriebsetzung im Intervallbetrieb zu steuern.

5. Gerät nach Anspruch 4, **dadurch gekennzeichnet, dass**
- das erste Arbeitszubehör (85) ein Arbeitsgefäß (20) umfasst, das für die Montage auf den Montagesockel (10) ausgelegt ist,
- das auf den Montagesockel (10) montierte Arbeitsgefäß (20) in Bezug auf den Montagesockel (10) aus einer Stoppstellung in eine Betriebsstellung bewegt werden kann, um bei einer vom Benutzer vorgenommenen Bedienbewegung den dritten Schalter (300) zu steuern.

6. Gerät nach Anspruch 5, **dadurch gekennzeichnet, dass** die Bedienbewegung aus der Stoppstellung in die Betriebsstellung Folgendes umfasst:
- einen ersten Teilweg, bei dem das Arbeitswerkzeug (30) des ersten Arbeitszubehörs (85) und die Antriebsachse (11) in Eingriff kommen,
- einen zweiten Teilweg, bei dem der dritte Schalter (300) gesteuert wird.

7. Gerät nach einem der Ansprüche 5 oder 6, **dadurch gekennzeichnet, dass** es zumindest ein elastisches Element umfasst, das dafür ausgelegt ist, bei der Bedienbewegung unter Spannung gesetzt zu werden und das Arbeitsgefäß (20) aus der Betriebsstellung in die Stoppstellung zurückzubewegen.

8. Gerät nach Anspruch 7, **dadurch gekennzeichnet, dass** es drei federbelastete Stößel (41) umfasst, die unter dem Arbeitsgefäß (20) verteilt sind, wenn das Arbeitsgefäß (20) auf dem Montagesockel (10) montiert ist, und dafür ausgelegt sind, bei der Bedienbewegung unter Spannung gesetzt zu werden und das Arbeitsgefäß (20) aus der Betriebsstellung in die Stoppstellung zurückzubewegen.

9. Gerät nach einem der Ansprüche 5 bis 8, **dadurch gekennzeichnet, dass** das erste Arbeitszubehör (85) Folgendes umfasst:
- einen Deckel (50), der dafür ausgelegt ist, abnehmbar auf das Arbeitsgefäß (20) montiert zu werden,
- eine Betätigungsstange (60), wobei die Betätigungsstange (60) dafür ausgelegt ist, bei der Bewegung zur Montage des Deckels (50) auf das Arbeitsgefäß (20) mit dem Deckel (50) in Eingriff zu kommen, und wobei die mit dem auf das Arbeitsgefäß (20) montierten Deckel (50) in Eingriff befindliche Betätigungsstange (60) dafür ausgelegt ist, durch den Deckel (50) so bewegt zu werden, dass sie bei der Bedienbewegung des Arbeitsgefäßes (20) den dritten Schalter (300) steuert.

10. Gerät nach Anspruch 9, **dadurch gekennzeichnet, dass** die Betätigungsstange (60) längs dem Arbeitsgefäß (20) angeordnet ist.

11. Gerät nach einem der Ansprüche 9 oder 10, **dadurch gekennzeichnet, dass** das erste Arbeitszubehör (85) eine Sperre (70) umfasst, die mit der Betätigungsstange (60) gekoppelt und dafür ausgelegt ist, folgende Stellungen einzunehmen:
- eine verriegelte Stellung, in der das Arbeitsgefäß (20) in der Stoppstellung verriegelt ist, wenn sich die Betätigungsstange (60) nicht mit dem Deckel (50) im Eingriff befindet, oder
- eine entriegelte Stellung, in der das Arbeitsgefäß (20) von der Stoppstellung in die Betriebsstellung bewegt werden kann, wenn sich die Betätigungsstange (60) mit dem Deckel (50) im Eingriff befindet.

12. Gerät nach Anspruch 11, **dadurch gekennzeichnet, dass** der Eingriff der Betätigungsstange (60) und des Deckels (50) eine vertikale Bewegung der Betätigungsstange (60) von einer freien Stellung in eine eingerastete Stellung bewirkt, dass die in der freien Stellung befindliche Betätigungsstange (60) die Sperre (70) in die verriegelte Stellung zwingt, um eine Bewegung des Arbeitsgefäßes (20) in die Betriebsstellung zu verhindern, und dass die in der eingerasteten Stellung befindliche Betätigungsstange (60) eine horizontale Rückzugsbewegung der Sperre (70) in die entriegelte Stellung gestattet, damit sie die Bewegung des Arbeitsgefäßes (20) in die Betriebsstellung nicht mehr verhindert.

13. Gerät nach einem der Ansprüche 11 oder 12, **dadurch gekennzeichnet, dass** die Sperre (70) dafür ausgelegt ist,
- die Betätigungsstange (60) in der eingerasteten Stellung zu blockieren, wenn sich die Sperre (70) in der entriegelten Stellung und das Arbeitsgefäß (20) in der Betriebsstellung befindet,
- die Betätigungsstange (60) freizugeben, wenn sich die Sperre (70) in der verriegelten Stellung und das Arbeitsgefäß (20) in der Stoppstellung befindet.

14. Gerät nach einem der Ansprüche 9 bis 13, **dadurch gekennzeichnet, dass** der Deckel (50) dafür ausgelegt ist, mit einem Bajonettverschluss auf das Arbeitsgefäß (20) montiert zu werden.

15. Gerät nach einem der Ansprüche 9 bis 14, **dadurch gekennzeichnet, dass** der Eingriff des Deckels (50) und der Betätigungsstange (60) das Einrasten einer Feder in eine Nut ist.

16. Gerät nach einem der Ansprüche 1 bis 15, **dadurch gekennzeichnet, dass** das Arbeitswerkzeug (30) des ersten Arbeitszubehörs (85) schneidend ist und dass das Gerät einen Mini-Zerkleinerer bildet, wenn das erste Arbeitszubehör (85) auf den Montagesockel (10) montiert ist.

## Claims

1. Food preparation appliance comprising:
- a support unit (10),
- at least a first removable working accessory (85) and a second removable working accessory (90) each comprising a working tool (30),
- an electric motor arranged in the support unit (10), with a drive shaft (11) designed to drive one of the working tools (30),
- an electrical circuit designed to switch on the electric motor, wherein the electrical circuit is designed to have a continuous operation function of the electric motor, **characterised in that** the first working accessory (85) is designed to disable the continuous operation function, when its working tool (30) is driven by the electric motor.

2. Appliance according to claim 1, **characterised in that** the electrical circuit comprises a first manual switch (100) designed to be able to select the continuous operation function of the electric motor, **in that** the electrical circuit comprises a second normally closed switch (200), mounted in series with the first switch (100) selecting the continuous operation function, and **in that** the first working accessory (85) is designed to switch and keep the second switch (200) in an open state, when its working tool (30) is driven by the electric motor.

3. Appliance according to claim 2, **characterised in that** the first working accessory (85) comprises a speed accelerator device (40) designed to be mounted between the electric motor and the working tool (30) of the first working accessory (85), and **in that** the speed accelerator device (40) is designed to switch and keep the second switch (200) in the open state.

4. Appliance according to claim 2 or 3, **characterised in that** the first manual switch (100) is also designed to be able to select an intermittent operation function of the electric motor, and **in that** the electrical circuit comprises a third normally open switch (300), mounted in series with the first switch (100) selecting the intermittent operation function and designed to control intermittent starting.

5. Appliance according to claim 4, **characterised**
- **in that** the first working accessory (85) comprises a working receptacle (20) designed to be mounted on the support unit (10),
- and **in that** the working receptacle (20) mounted on the support unit (10) is movable relative to the support unit (10) from a stop position to an operating position, to control the third switch (300), during a control movement caused by a user.

6. Appliance according to claim 5, **characterised in that** the control movement from the stop position to the operating position comprises:
- a first stroke portion during which the working tool (30) of the first working accessory (85) and the drive shaft (11) engage with each other,
- a second stroke portion during which the third switch (300) is controlled.

7. Appliance according to claim 5 or 6, **characterised in that** it comprises at least one elastic element designed to be placed under stress during the control movement and push the working receptacle (20) from the operating position to the stop position.

8. Appliance according to claim 7, **characterised in that** it comprises three spring-loaded pushers (41) distributed underneath the working receptacle (20) when the working receptacle (20) is mounted on the support unit (10), designed to be placed under stress during the control movement and push the working receptacle (20) from the operating position to the stop position.

9. Appliance according to one of claims 5 to 8, **characterised in that** the first working accessory (85) comprises:
- a lid (50) designed to be removably mounted on the working receptacle (20),
- a control rod (60), **in that** the control rod (60) is designed to engage with the lid (50) during the movement to fit the lid (50) on the working receptacle (20), and **in that** the control rod (60), engaged with the lid (50) mounted on the working receptacle (20), is designed to be moved by the lid (50) to control the third switch (300), during the control movement of the working receptacle (20).

10. Appliance according to claim 9, **characterised in that** the control rod (60) is arranged along the working receptacle (20).

11. Appliance according to claim 9 or 10, **characterised in that** the first working accessory (85) comprises a lock (70) coupled to the control rod (60) and designed to take up:
- a locking position in which the working receptacle (20) is locked in the stop position, if the control rod (60) is not engaged with the lid (50), or
- an unlocked position in which the working receptacle (20) can move from the stop position to the operating position, if the control rod (60) is engaged with the lid (50).

12. Appliance according to claim 11, **characterised in that** the engagement of the control rod (60) with the lid (50) causes the control rod (60) to move vertically from a free position to an engaged position, **in that** the control rod (60) in the free position forces the lock (70) to the locking position, to obstruct the movement of the working receptacle (20) towards the operating position, and **in that** the control rod (60) in the engaged position allows a horizontal backward movement of the lock (70) to the unlocked position, so that it no longer obstructs the movement of the working receptacle (20) to the operating position.

13. Appliance according to claim 11 or 12, **characterised in that** the lock (70) is designed:
- to block the control rod (60) in the engaged position when the lock (70) is in the unlocked position and when the working receptacle (20) is in the operating position,
- to leave the control rod (60) free when the lock (70) is in the locking position, the working receptacle (20) being in the stop position.

14. Appliance according to one of claims 9 to 13, **characterised in that** the lid (50) is designed to be mounted on the working receptacle (20) according to a bayonet interface.

15. Appliance according to one of claims 9 to 14, **characterised in that** the engagement of the lid (50) with the control rod (60) is the engagement of an index in a groove.

16. Appliance according to one of claims 1 to 15, **characterised in that** the working tool (30) of the first working accessory (85) is sharp and **in that** the appliance forms a mini chopper when the first working accessory (85) is mounted on the support unit (10).
